# FASCICULE DE BREVET EUROPEEN

(11) **EP 0 582 524 B1**
(45) Date de publication et mention de la délivrance du brevet: **23.10.1996**
(21) Numéro de dépôt: 93402022.3
(22) Date de dépôt: 06.08.1993
(51) Int. Cl.: B60R 19/02

(54) **Pare-chocs à absorbeur de chocs modulaire, notamment pour véhicule automobile**
Stossstange mit modularem Stossfänger, insbesondere für Kraftfahrzeuge
Bumper with a modular shockabsorber, in particular for a motor vehicle

(30) Priorité: 06.08.1992 FR 9209785
(43) Date de publication de la demande: 09.02.1994
(73) Titulaire: COMPAGNIE PLASTIC OMNIUM Société Anonyme dite:, 69007 Lyon (FR)
(72) Inventeur: Pernot, Jean-Marie, F-52360 Ordigny au Mont (FR)
(74) Mandataire: Nony, Michel

(56) Documents cités:
- EP-A- 0 170 335
- EP-A- 0 256 174
- GB-A- 2 197 267
- PATENT ABSTRACTS OF JAPAN vol. 8, no. 238 (M-335)(1675) 31 Octobre 1984 & JP-A-59 118 548 (HASHIMOTO) 9 Juillet 1984

## Description

La présente invention est relative à un pare-chocs à absorbeur de chocs modulaire, notamment pour véhicule automobile.

On connaît déjà des pare-chocs à absorbeur de chocs intégré du type dans lequel l'absorbeur de chocs est soit rapporté, soit moulé en une seule pièce en même temps que le bouclier dudit pare-chocs.

De tels absorbeurs de chocs décrits notamment dans EP-A-O 256 174 présentent l'inconvénient d'avoir des caractéristiques mécaniques qui sont définitivement établies dès leur fabrication.

Cependant, les règlementations en vigueur en matière de sécurité routière imposent d'équiper chaque véhicule d'un pare-chocs dont les caractéristiques mécaniques sont déterminées en fonction du poids du véhicule.

Par conséquent, selon qu'un même modèle d'automobile se présente en version coupée, berline ou utilitaire, il nécessite un pare-chocs d'un type particulier, alors que la forme extérieure du bouclier reste inchangée.

En outre, ce problème est accentué du fait que les normes diffèrent d'un pays à l'autre.

La présente invention vise à fournir un nouveau pare-chocs dont la résistance aux chocs est adaptable en fonction du type d'usage auquel il est destiné.

En outre, un pare-chocs selon la présente invention est d'une réalisation particulièrement simple et économique.

La présente invention a pour objet un pare-chocs à absorbeur de chocs intégré, notamment pour véhicule automobile, du type comportant d'une part un bouclier et d'autre part, au moins un élément de renfort apte à s'insérer dans ledit bouclier pour augmenter sa résistance mécanique, caractérisé par le fait que le bouclier est muni intérieurement de cloisons parallèles à la direction de déplacement du véhicule, lesdites cloisons formant un absorbeur de chocs cloisonné et que les éléments de renfort sont constitués par des cloisons supplémentaires aptes à venir s'ajouter aux cloisons déjà présentes dans l'absorbeur de chocs cloisonné.

Selon l'invention, on réalise un absorbeur de chocs cloisonné qui est constitué par une pluralité de cloisons dont la plupart sont parallèles à la direction de travail dudit absorbeur de chocs, qui est en général la direction selon laquelle le véhicule se déplace.

Avantageusement, les cloisons supplémentaires présentent une section, par exemple en forme de ligne brisée ou de sinusoïde, qui leur confère une plus grande inertie.

Dans un mode de réalisation préféré de l'invention, au moins une des cloisons supplémentaires comporte, ouverte sur un de ses côtés de tranches, une fente de positionnement dont la largeur correspond sensiblement à l'épaisseur d'une cloison de l'absorbeur de chocs, tandis que ladite cloison de l'absorbeur de chocs comporte, débouchant sur son côté de tranche destiné à recevoir la cloison supplémentaire, une fente dont la largeur est voisine de l'épaisseur de la cloison supplémentaire.

Dans ce mode de réalisation, on insère la cloison supplémentaire dans l'absorbeur de chocs en présentant ladite cloison supplémentaire avec sa fente en face de celle de la cloison de l'absorbeur de chocs, ces deux cloisons étant sensiblement perpendiculaires l'une par rapport à l'autre.

Selon une variante préférée, la cloison supplémentaire est munie de nervures de rigidité au voisinage de sa fente de positionnement, la cloison de l'absorbeur de chocs destinée à la recevoir comportant de préférence également des nervures coopérant avec celles de la cloison supplémentaire lorsque cette dernière est positionnée dans l'absorbeur de chocs, ce qui permet d'améliorer le maintien en position perpendiculaire des deux cloisons de l'une par rapport à l'autre.

Dans le but de mieux faire comprendre l'invention, on va en décrire maintenant un mode de réalisation donné à titre d'exemple et sans aucun caractère limitatif en référence au dessin annexé dans lequel :
- la figure 1 est une vue en perspective partiellement arrachée d'un pare-chocs vu de l'intérieur et d'un élément de renfort selon un premier mode de réalisation de l'invention,
- la figure 2 est une vue analogue à la figure 1 d'un autre pare-chocs et d'éléments de renfort selon un deuxième mode de réalisation de l'invention,
- la figure 3 représente en coupe deux variantes des éléments de renfort de la figure 2,
- la figure 4 est une vue en perspective illustrant le mode d'assemblage d'éléments de renfort selon un mode de réalisation particulier de l'invention,
- la figure 4a est une vue en coupe selon IVa-IVa de la figure 4,
- la figure 5 est une vue analogue à la figure 4 illustrant un autre mode de réalisation de l'invention et,
- la figure 5a est une vue en coupe selon Va-Va de la figure 5.

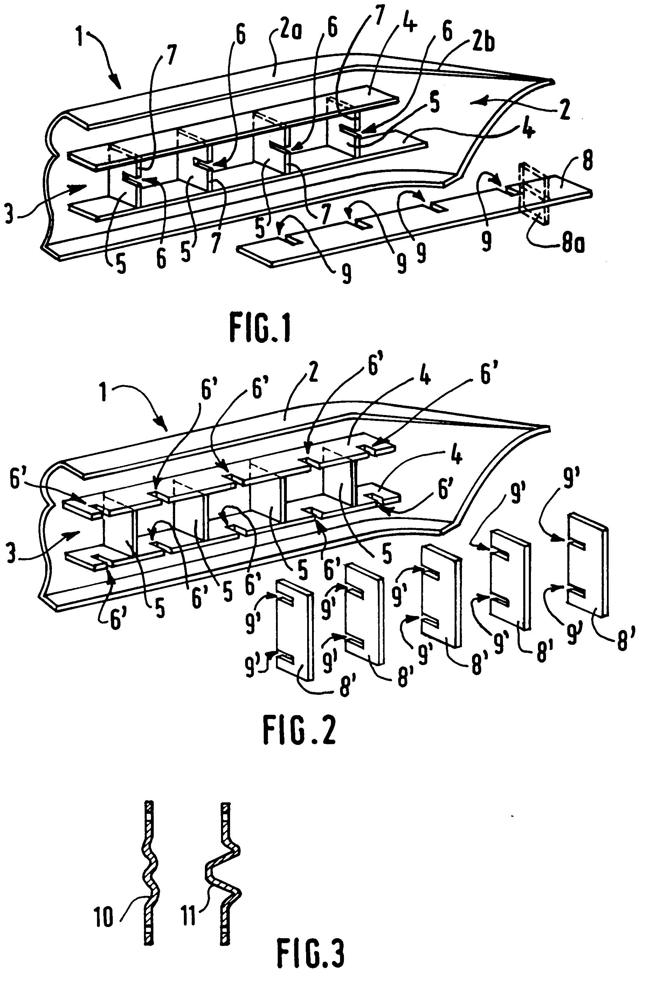

Le pare-chocs 1 représenté sur la figure 1 est constitué par un bouclier 2 qui comporte une partie centrale longitudinale 2a et deux retours d'angle 2b à chacune des extrémités de la partie 2a. Seul le retour d'angle de droite est illustré ici. A l'intérieur du bouclier 2 est logé un absorbeur de chocs 3 qui résulte dans le cas présent d'une seule opération de moulage avec le bouclier 2.

L'absorbeur de chocs 3 illustré ici comporte deux cloisons horizontales 4 disposées longitudinalement par rapport au pare-chocs, entre lesquelles s'étendent des cloisons verticales 5.

Chacune desdites cloisons verticales 5 comporte, dans sa partie médiane, une fente horizontale 6 qui débouche sur le côté de tranche 7 de chaque cloison 5.

Conformément à l'invention, un tel absorbeur de chocs 3 est destiné à recevoir un élément de renfort qui se présente dans ce mode de réalisation sous la forme d'une cloison horizontale 8 de dimensions sensiblement identiques à celles des deux cloisons 4.

La cloison 8 comporte des fentes 9 qui sont aptes à coopérer avec les fentes 6 des cloisons 5 lorsque l'élément de renfort 8 est présenté à l'intérieur de l'absorbeur de chocs 3 dans la position représentée.

Dans le mode de réalisation décrit, l'élément de renfort 8 confère à l'absorbeur de chocs 3 une résistance mécanique améliorée adaptée à des véhicules plus lourds ou à des cahiers des charges plus sévères.

Pour des véhicules encore plus lourds, ou un cahier des charges encore plus sévère on peut recourir à un élément de renfort 8 plus résistant, qui peut comporter par exemple des cloisons supplémentaires s'étendant verticalement entre ses fentes 9, telles que la cloison 8a qui est représentée en traits discontinus.

Sur la figure 2, on retrouve un pare-chocs 1 comportant un bouclier 2 et un absorbeur de chocs 3, qui présentent la même géométrie que celui de la figure 1.

Dans ce mode de réalisation, les cloisons 5 sont laissées intactes et des paires de fentes 6' apparaissent sur chacune des cloisons horizontales 4, entre les cloisons verticales 5.

Comme précédemment, chacune des fentes 6' débouche sur le petit côté de tranche libre desdites cloisons 4.

Des éléments de renfort 8' en forme de cloisons supplémentaires sont destinés à venir s'insérer verticalement dans l'absorbeur de chocs 3.

Des paires de fentes 9' ménagées sur chacun des éléments de renfort 8' sont aptes à coopérer avec les paires de fentes 6' des deux cloisons horizontales 4.

Comme dans le mode de réalisation précédemment décrit, le bouclier sans les éléments de renfort 8' constitue un ensemble de résistance mécanique minimale. Sa résistance mécanique peut être augmentée selon les besoins par exemple en ajoutant des éléments de renfort 8' et éventuellement en donnant à ces derniers une section sinusoïdale 10 ou en ligne brisée 11 telles que représentées sur la figure 3.

Dans une variante, les éléments de renfort peuvent avoir partiellement une forme tubulaire.

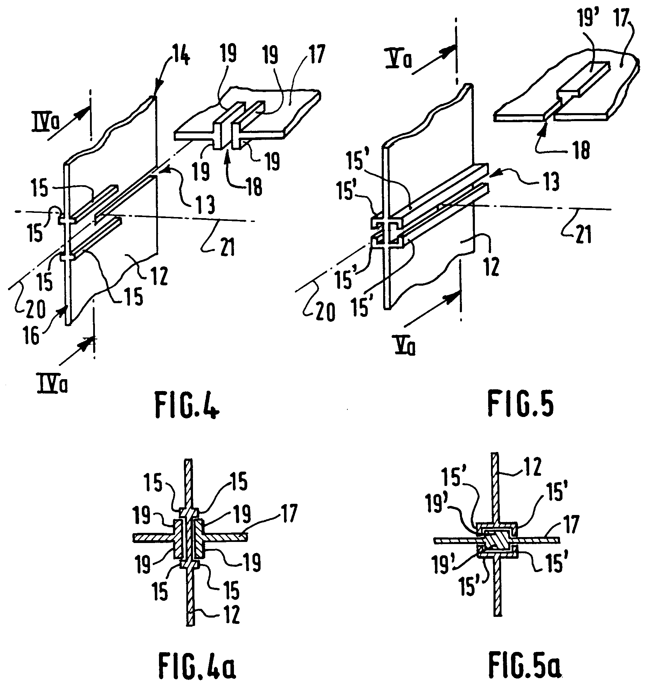

Les figures 4 et 5 illustrent des modes de réalisation dans lesquels des éléments de renfort sont assujettis à des cloisons d'absorbeur de chocs au moyen de fentes renforcées par des nervures.

La cloison 12 représentée sur la figure 4 est une cloison d'un absorbeur de chocs du type de ceux représentés sur les figures 1 et 2.

La cloison 12 comporte une fente horizontale 13 qui débouche sur son petit côté de tranche 14.

Dans le mode de réalisation décrit, la cloison 12 comporte également deux paires de nervures horizontales 15 situées symétriquement sur les deux faces de ladite cloison 12 au-dessus et en-dessous de la fente 13, et s'étendant jusqu'au petit côté de tranche 16 qui se trouve au contact du bouclier non représenté.

Un élément de renfort 17, dont on n'a représenté ici que la partie environnant sa fente de positionnement 18, comporte deux paires de nervures de renfort 19 situées de part et d'autre de ladite fente 18. Celles-ci s'étendant perpendiculairement audit élément de renfort sur une hauteur égale à la distance qui sépare les deux paires de fentes 15 de la cloison 12, en étant écartées d'une largeur voisine de l'épaisseur de la cloison 12.

Ainsi qu'on le voit plus clairement sur la vue en coupe 4a, les nervures 19 enserrent la cloison 12 entre les nervures 15, pour limiter les pivotements de la plaque de renfort 17 par rapport à la cloison 12 autour d'un axe horizontal virtuel 20.

En outre, en s'appuyant sur les nervures 15, les nervures de renfort 19 limitent également les risques de pivotement de l'élément de renfort 17 par rapport à la cloison 12 autour d'un second axe horizontal virtuel 21.

Le mode de réalisation représenté sur la figure 5 est une variante dans laquelle la plaque 12 comporte deux paires de nervures horizontales 15', chacune en forme de L, situées de part et d'autre de la fente 13. Comme on le voit sur la coupe 5a, lesdites nervures 15' définissent entre elles un passage de section rectangulaire ouvert dans sa partie médiane.

D'autre part, l'élément de renfort 17 comporte, dans le prolongement de sa fente 18, deux nervures en surépaisseur 19' qui lui confèrent une section rectangulaire (figure 5a) dans sa partie centrale.

Sur la vue en coupe 5a, on voit clairement l'engagement desdites nervures 19' à l'intérieur des nervures 15' de la cloison 12.

Comme précédemment, les rotations dudit élément de renfort 17 autour des axes horizontaux virtuels 20 et 21 sont fortement limitées, grâce aux nervures 15' et 19'.

Il est bien entendu que les modes de réalisation qui viennent d'être décrits ne présentent aucun caractère limitatif et qu'ils pourront recevoir toutes modifications désirables sans sortir pour cela du cadre de l'invention.

En particulier, la forme des éléments de renfort décrits ici est particulièrement simple et pourrait avantageusement être rendue plus complexe dans le but d'augmenter l'inertie de ces derniers.

Les éléments de renfort peuvent selon l'invention être constitués par des éléments simples tels que des plaquettes ou complexes, tels que des structures tridimensionnelles, par exemple en nids d'abeilles.

Enfin, les éléments de renfort selon l'invention peuvent être placés sur des absorbeurs de chocs moulés en même temps que le bouclier puis basculés à l'intérieur de ce dernier grâce à des charnières, ou encore sur des absorbeurs de chocs rapportés dans le bouclier.

## Revendications

1. Pare-chocs à absorbeur de chocs intégré, notamment pour véhicule automobile, du type comportant d'une part un bouclier et d'autre part, au moins un élément de renfort apte à s'insérer dans ledit bouclier pour augmenter sa résistance mécanique, caractérisé par le fait que le bouclier (1) est muni intérieurement de cloisons (4,5) parallèles à la direction de déplacement du véhicule, lesdites cloisons (4,5) formant un absorbeur de chocs cloisonné (3) et que les éléments de renfort sont constitués par des cloisons supplémentaires (8,8',17) aptes à venir s'ajouter aux cloisons déjà présentes (4,5) dans l'absorbeur de chocs cloisonné (3).

2. Pare-chocs selon la revendication précédente, caractérisé par le fait que les cloisons supplémentaires présentent une section de plus grande inertie que celles déjà présentes dans l'absorbeur de chocs (3), cette section étant par exemple en forme de sinusoïde (10), de ligne brisée (11) ou de tube.

3. Pare-chocs selon l'une quelconque des revendications précédentes, caractérisé par le fait qu'au moins une des cloisons supplémentaires (8,8') comporte, ouverte sur un de ses côtés de tranche, une fente de positionnement (9,9') dont la largeur correspond sensiblement à l'épaisseur d'une cloison (4,5) de l'absorbeur de chocs (3), tandis que ladite cloison (4,5) de l'absorbeur de chocs (3) comporte, débouchant sur son côté de tranche (7) destiné à recevoir la cloison supplémentaire (8,8'), une fente (6,6') dont la largeur est voisine de l'épaisseur de la cloison supplémentaire (8,8').

4. Pare-chocs selon la revendication précédente, caractérisé par le fait qu'au moins une cloison supplémentaire (17) est munie de nervures de rigidité (19,19') au voisinage de sa fente de positionnement (18).

5. Pare-chocs selon la revendication précédente, caractérisé par le fait qu'une cloison (12) de l'absorbeur de chocs (3) qui est destinée à recevoir une cloison supplémentaire (17) comporte également des nervures (15,15') coopérant avec celles (19,19') de la cloison supplémentaire (17).

## Claims

1. A bumper with an integrated shock absorber, in particular for a motor vehicle, of the type comprising, on the one hand, a shield, and on the other hand, at least one reinforcing element capable of being inserted in the said shield for increasing its mechanical strength, characterized in that the shield (1) is internally provided with partitions (4, 5) parallel to the displacement direction of the vehicle, the said partitions (4, 5) forming a cellular shock absorber (3), and that the reinforcing elements are constituted by additional partitions (8, 8', 17) capable of being added to the partitions (4, 5) already present in the cellular shock absorber (3).

2. A bumper according to the preceding claim, characterized in that the additional partitions have a cross-section with a greater dimensional stability than those already present in the shock absorber (3), this cross-section being, for example, in the form of a sinusoid (10), a broken line (11) or of a tube.

3. A bumper according to one of the preceding claims, characterized in that at least one of the additional partitions (8, 8'), has, open on one of its side edges, a positioning slot (9, 9') whose width substantially corresponds to the thickness of one partition (4, 5) of the shock absorber (3), while the said partition (4, 5) of the shock absorber (3) has, opening out on its side edge (7) intended to receive the additional partition (8, 8'), a slot (6, 6') whose width approximates to the thickness of the additional partition (8, 8').

4. A bumper according to the preceding claim, characterized in that at least one additional partition (17) is provided with stiffening ribs (19, 19') in the vicinity of its positioning slot (18).

5. A bumper according to the preceding claim, characterized in that one partition (12) of the shock absorber (3), which is intended to receive an additional partition (17), also has ribs (15, 15') cooperating with those (19, 19') of the additional partition (17).

## Patentansprüche

1. Stoßstange mit integriertem Stoßfänger, insbesondere für Kraftfahrzeuge, von der Bauart mit einerseits einem Schild und andererseits wenigstens einem Verstärkungselement, das dazu ausgebildet ist, in den Schild einzugreifen, um dessen mechanische Festigkeit zu erhöhen, dadurch gekennzeichnet, daß der Schild (1) im Inneren mit zur Fortbewegungsrichtung des Fahrzeugs parallelen Zwischenwänden (4, 5) versehen ist, die einen Zellenstoßfänger (3) bilden, und daß die Verstärkungselemente durch zusätzliche Zwischenwände (8, 8', 17) gebildet werden, die dazu ausgebildet sind, zu den bereits im Zellenstoßfänger (3) vorhandenen Zwischenwänden (4, 5) hinzugefügt zu werden.

2. Stoßstange nach dem vorstehenden Anspruch, dadurch gekennzeichnet, daß die zusätzlichen Zwischenwände einen Querschnitt mit größerem Beharrungsvermögen als die bereits im Stoßfänger (3) vorhandenen bilden, wobei dieser Querschnitt beispielsweise die Form einer Sinuskurve (10), einer gerochenen Linie (11) oder eines Rohres hat.

3. Stoßstange nach einem der vorstehenden Ansprüche, dadurch gekennzeichnet, daß wenigstens eine der zusätzlichen Zwischenwände (8, 8') einen an einer ihrer Stirnseiten offenen Positionierschlitz (9, 9') aufweist, dessen Weite im wesentlichen der Dicke einer Zwischenwand (4, 5) des Stoßfängers (3) entspricht, während diese Zwischenwand (4, 5) des Stoßfängers (3) einen Schlitz (6, 6') aufweist, der in ihrer Stirnseite mündet, die dazu bestimmt ist, die zusätzliche Zwischenwand (8, 8') aufzunehmen, wobei die Weite dieses Schlitzes in der Nähe der Dicke der zusätzlichen Zwischenwand (8, 8') liegt.

4. Stoßstange nach dem vorstehenden Anspruch, dadurch gekennzeichnet, daß wenigstens eine zusätzliche Zwischenwand (17) mit Versteifungsrippen (19, 19') benachbart zu ihrem Positionierschlitz (18) versehen ist.

5. Stoßstange nach dem vorstehenden Anspruch, dadurch gekennzeichnet, daß eine Zwischenwand (12) des Stoßfängers (3), die dazu bestimmt ist, eine zusätzliche Zwischenwand (17) aufzunehmen, ebenfalls Rippen (15, 15') aufweist, die mit denen (19, 19') der zusätzlichen Zwischenwand (17) zusammenwirken.
